# EUROPEAN PATENT APPLICATION

(11) **EP 4 727 067 A1**
(43) Date of publication of application: **15.04.2026**
(21) Application number: 25200134.2
(22) Date of filing: 04.09.2025
(51) Int. Cl.: H04L 12/18, G06F 13/40, H04N 23/13

(54) **VEHICLE SITUATIONAL AWARENESS ARCHITECTURE**

(30) Priority: 13.10.2024 US 202463706690 P; 11.08.2025 US 202519296881
(71) Applicant: One Stop Systems, Inc., Escondido CA 92029 (US)
(72) Inventor: REARDON, James Micheal, San Clemente, CA (US); ISON Jr., James John, San Diego, CA (US); MACHART, Mandel J., Rochester, MI (US); KLIDA, Jeffrey R., Rochester, MI (US)
(74) Representative: PGA S.p.A., Milano, Succursale di Lugano

(57) **Abstract**

A vehicle situational awareness system includes a switched fabric, at least one sensor concentrator, and at least one application computer. The switched fabric includes a management agent and at least one switching device, and the sensor concentrator includes at least one sensor and at least one central processing unit (CPU). The switched fabric interconnects the at least one sensor concentrator and the at least one application computer via a PCI Express interface to provide low-latency, high-bandwidth communication supporting both point-to-point and point-to-multipoint data transmission. The management agent controls switched fabric operations including power-on startup, regular operation, and fault response. The switched fabric is configured to route sensor data from the at least one sensor concentrator to the at least one application computer with simultaneous data availability across multiple application computers using multicast capabilities.

## Description

### CROSS REFERENCE TO RELATED APPLICATIONS

This patent application claims priority to U.S. Provisional Application 63/706,690 filed on October 13, 2024 and U.S. Non-Provisional Application 19/296,881 filed on August 11, 2025, the entire disclosure of both of which is incorporated herein by reference.

### STATEMENT OF GOVERNMENT GRANT

This invention was made with government support under Grant No. W56HZV-17-C-0062 awarded by US Army Ground Vehicle System Center (GVSC). The government has certain rights in the invention.

### BACKGROUND

Modern vehicle operations, whether manned or unmanned, require comprehensive situational awareness to ensure safe and effective mission completion. Traditional vehicle sensor systems suffer from significant limitations, including data processing bottlenecks, communication latencies, integration difficulties with legacy systems, and inability to provide simultaneous data access across multiple processing units. In moving vehicles, the lack of comprehensive situational awareness can create critical vulnerabilities that can impede vehicle performance, compromise mission objectives, or result in harm to the vehicle, its occupants, or external objects and personnel.

Unmanned vehicles and autonomous systems demand real-time sensor data fusion from multiple heterogeneous sources, including video cameras, thermal imaging systems, LIDAR sensors, and focal plane arrays. These systems may require not only data collection but also advanced computational processing such as object recognition, threat detection, target identification, and predictive analytics to enable autonomous decision-making. Similarly, manned vehicles operated in environments where crew members lack complete 360-degree visibility of their surroundings may require augmented situational awareness through integrated sensor systems and real-time data processing.

Existing vehicle awareness systems face several technical challenges: conventional networking architectures introduce unacceptable latencies for time-critical applications; traditional data distribution methods create bottlenecks when multiple processing units require simultaneous access to the same sensor data; legacy sensor interfaces cannot be efficiently integrated with modern high-speed computing systems; and existing solutions require large form factors that are incompatible with space-constrained vehicle environments.

Furthermore, mission-critical applications such as navigation, threat detection, target acquisition, and off-vehicle communication require guaranteed low-latency data delivery with deterministic timing characteristics. Existing systems fail to provide the necessary performance while maintaining the compact form factor, power efficiency, and reliability required for demanding vehicle environments, including military operations, autonomous commercial vehicles, and scientific exploration platforms.

### SUMMARY

The present disclosure describes a vehicle situational awareness architecture that overcomes the limitations of conventional systems by providing ultra-low-latency, time-coherent delivery of sensor data through an innovative distributed multiprocessing system. The system enables simultaneous data availability across multiple application computers while supporting diverse use cases including navigation, object recognition, target identification, threat detection, and off-vehicle communication in a compact, vehicle-compatible form factor.

The disclosed system comprises three primary hardware components operating in a synergistic architecture: sensor concentrators for intelligent data acquisition and processing, a high-performance switched fabric device for low-latency data distribution, and application computers for specialized processing and user interaction. These components are interconnected through a PCI Express switched fabric architecture, which provides high bandwidth, minimal latency, and efficient multicast capabilities. This architecture simultaneously offers Time-Sensitive Networking (TSN) Ethernet connectivity, enabling seamless integration with existing vehicle systems and legacy components.

Each sensor concentrator functions as an intelligent data acquisition and processing node (i.e., data acquisition node capable of computation, image processing, and AI inferencing) that interfaces with multiple sensor types through industry-standard connections, including but not limited to RS-170, HD-SDI, CoaxExpress, GMSL2, USB, PCI Express, and Ethernet protocols. Beyond simple data collection, sensor concentrators incorporate advanced processing capabilities such as real-time video stitching from multiple synchronized sensors, AI-based inferencing for object and threat detection, adaptive field-of-view targeting based on operator input or automated algorithms, and optional data compression. For applications requiring extremely low latency, sensor concentrators can apply AI computational functions directly to incoming sensor data, minimizing processing delays via edge computing techniques. The concentrators can receive field-of-view optimization hints from application computers or human operators through TSN Ethernet, enabling dynamic adaptation to mission requirements.

A switched fabric is a network topology where multiple peer nodes, such as sensors, computers, or other devices, are fully interconnected on an equal basis with all other nodes through one or more switching devices to facilitate efficient communication. The switched fabric device represents the central nervous system of the architecture, utilizing advanced PCI Express switching technology to create a high-bandwidth, low-latency communication backbone. This switching infrastructure may support non-blocking data forwarding, ensuring that high-volume traffic between any group of ports does not interfere with simultaneous data transmission on other ports. The switched fabric can enable efficient point-to-point communication for dedicated data streams and point-to-multipoint distribution for broadcasting sensor data to multiple application computers simultaneously. Each PCI Express connection may support multi-gigabyte per second data throughput, providing sufficient bandwidth for uncompressed high-resolution sensor data while maintaining deterministic latency characteristics essential for real-time applications.

Application computers within the system may serve dual roles as both data consumers and system controllers, supporting vehicle crew interfaces, automated processing functions, and external communication capabilities. These computers can operate in manned configurations with integrated displays, human input devices, and crew interfaces, or in unmanned modes for autonomous processing, data analysis, and off-vehicle communication via radio or network links. The application computers may provide feedback to sensor concentrators through the switched fabric, enabling dynamic reconfiguration of sensor parameters, field-of-view adjustments, and processing priorities based on real-time mission requirements.

A distinguishing characteristic of the disclosed architecture is its ability to deliver sensor data from the point of acquisition to multiple points of utilization in a single operation through advanced multicast capabilities. This ensures that all application computers may operate on identical, time-synchronized data sets, significantly reducing or eliminating the temporal inconsistencies and data skew that plague conventional systems. The system may achieve sensor data delivery from acquisition to display in less than 50 milliseconds, meeting stringent timing requirements for safety-critical applications such as collision avoidance, navigation, and defensive systems.

The ultra-low latency and simultaneous data availability are achieved through the use of PCI Express switched fabric technology combined with intelligent multicast distribution algorithms. The PCI Express infrastructure provides direct, high-speed connectivity between sensor concentrators and application computers, eliminating intermediate processing stages and network protocol overhead that can introduce delays in conventional systems. The multicast functionality enables a single sensor concentrator to simultaneously deliver identical data streams to multiple application computers, preventing data transfer bottlenecks while ensuring temporal coherence across all processing nodes.

The system's architecture enables integration of legacy devices and sensors that would otherwise be incompatible with high-speed computing systems, extending the useful life of existing vehicle equipment while providing access to modern processing capabilities. This integration capability, combined with the system's compact form factor and vehicle-appropriate environmental specifications, makes the disclosed architecture suitable for deployment across diverse applications, including military vehicles, commercial autonomous systems, scientific research platforms, underwater exploration vehicles, space rovers, and industrial automation systems.

According to a first aspect, a vehicle situational awareness system is disclosed, which comprises a switched fabric including a management agent and at least one switching device, at least one sensor concentrator connected to the switched fabric, wherein each sensor concentrator includes at least one sensor and at least one central processing unit (CPU), and at least one application computer connected to the switched fabric. The switched fabric interconnects the at least one sensor concentrator and the at least one application computer via a PCI Express interface to provide low-latency, high-bandwidth communication supporting both point-to-point and point-to-multipoint data transmission. The management agent controls switched fabric operations including power-on startup, regular operation, and fault response. The switched fabric is configured to route sensor data from the at least one sensor concentrator to the at least one application computer with simultaneous data availability across multiple application computers using multicast capabilities.

According to a second aspect, a method of providing vehicle situational awareness is disclosed, which comprises acquiring sensor data from at least one sensor connected to at least one sensor concentrator, processing the sensor data using at least one CPU within at least one sensor concentrator, routing the processed sensor data through a switched fabric comprising a management agent and a switching device, and delivering the sensor data to at least one application computer via PCI Express multicast capabilities.

### BRIEF DESCRIPTION OF THE DRAWINGS

Figure 1A is an example of a vehicle situational awareness architecture device.
Figure 1B is an example of a switched fabric device.
Figure 1C is an example of a sensor concentrator.
Figure 2 is a system block diagram of the device.
Figure 3 shows the internal functions of a sensor concentrator.
Figure 4 shows the internal functions and external connections of an application computer.

### DETAILED DESCRIPTION

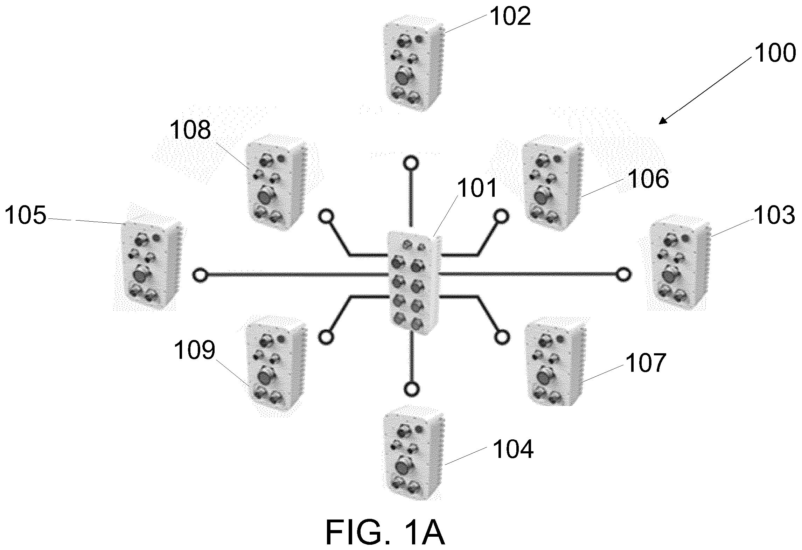

Figure 1A illustrates a top-level architectural diagram 100 of the vehicle situational awareness system, demonstrating the interconnected hardware elements that collectively provide comprehensive real-time environmental monitoring and data processing capabilities. The switched fabric device 101 serves as the central communication hub, positioned at the core of the networked architecture to facilitate high-speed, low-latency data exchange between all system components. This centralized switching approach enables efficient data distribution while maintaining the deterministic timing characteristics essential for mission-critical vehicle operations.

The system incorporates multiple sensor concentrators 102, 103, 104, 105, each connected to the switched fabric device 101 through high-performance PCI Express interfaces, typically utilizing PCI Express Generation 3 or higher standards to ensure adequate bandwidth for real-time sensor data transmission. These sensor concentrators 102, 103, 104, 105 interface with external sensors (not shown) on interfaces such as MIPI CSI2, GMSL, HD-SDI, RS170, CoaxExpress, Ethernet, USB, and PCIe, positioned around the vehicle's perimeter, creating a comprehensive 360-degree awareness capability. In the exemplary configuration shown, the first sensor concentrator 102 manages sensors mounted on the vehicle's forward section, providing frontal situational awareness including obstacle detection, navigation support, and forward threat assessment. The second sensor concentrator 103 interfaces with right-side mounted sensors, monitoring the starboard approach vectors and lateral environmental conditions. Similarly, the third sensor concentrator 104 processes data from rear-mounted sensors, enabling reverse operation support and aft threat detection, while the fourth sensor concentrator 105 handles left-side sensors for port-side monitoring and lateral awareness.

While Figure 1A depicts four sensor concentrators 102, 103, 104, 105 as a representative implementation, the system architecture supports scalable configurations ranging from single-concentrator deployments for specialized applications to multi-concentrator arrays exceeding four units for comprehensive coverage of complex vehicle geometries or specialized mission requirements. Each sensor concentrator can be uniquely configured with varying port quantities, interface types, and processing capabilities tailored to specific sensor arrays and mission profiles. This modular approach enables optimization for diverse vehicle types, from compact unmanned systems requiring minimal sensor integration to large platforms demanding extensive multi-sensor fusion capabilities. Beyond sensor interface functions, each concentrator incorporates substantial computational resources, including dedicated processing units, memory systems, and specialized accelerators, such as H.264 and H.265 image encoders and decoders, encryption accelerators, AI/ML accelerators such as GPUs, enabling sophisticated real-time data processing at the point of acquisition.

The system's application computer array 106, 107, 108, 109 connects to the switched fabric device 101 through PCI Express interfaces, ensuring consistent high-bandwidth, low-latency communication paths for all computational nodes. These application computers may support both manned operational modes and can include integrated display systems, human interface devices, crew interaction capabilities, unmanned processing modes for autonomous system operation, automated threat response, and off-platform communication functions. The scalable architecture accommodates varying quantities of application computers based on mission complexity, processing requirements, and operational redundancy needs. Each application computer can be individually configured with specialized processing capabilities, interface options, and operational software suited to specific functional roles within the overall system architecture.

The vehicle situational awareness system can be deployed across diverse operational environments and platform types, providing versatility in addressing varied mission requirements. In military applications, the system provides comprehensive battlefield awareness, supporting navigation through hostile terrain, automated threat detection and classification, target acquisition and tracking, and secure communication with command elements. For commercial autonomous vehicle implementations, the system enables safe navigation through complex traffic environments, pedestrian detection and avoidance, infrastructure monitoring, and integration with intelligent transportation systems. In scientific exploration contexts, the system supports autonomous navigation through challenging terrain, environmental monitoring and data collection, specimen identification and analysis, and reliable communication with research teams across extended operational distances.

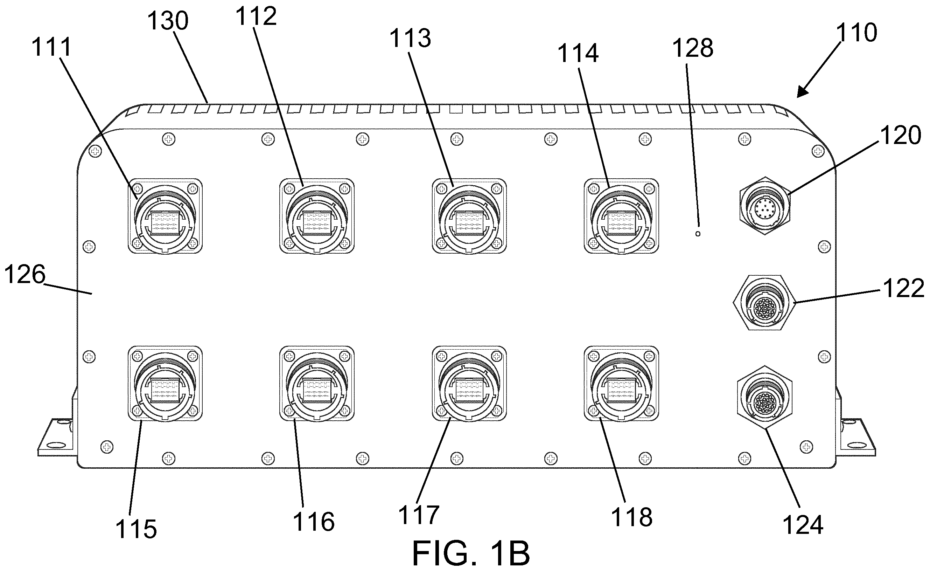

Figure 1B depicts an example implementation of a switched fabric device 110. This example implementation includes eight (8) identical PCI Express interfaces 111, 112, 113, 114, 115, 116, 117, 118. Any of these eight ports may connect to either application computers or sensor concentrators. This switched fabric device 110 also includes a port 120 for TSN Ethernet connection, a maintenance port 122, a power supply port 124, and a power and status indicator 128. Depending on the application, the switched fabric device may be configured with a different number of PCI Express interface ports. The example implementation shows a hardware case 126 with physical dimensions of approximately 15" H x 6.5" W x 3" D. The backside 130 of the switched fabric device 110 is configured to optimize heat dissipation by convection to surrounding air. Other mechanisms for heat dissipation may be substituted, including conduction cooling to the surrounding structure, or liquid cooling.

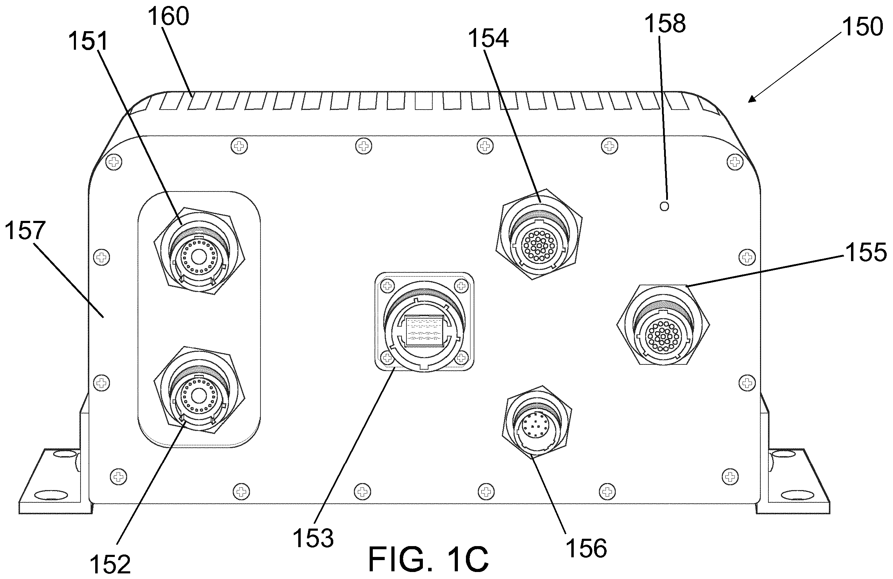

Figure 1C depicts an example implementation of a sensor concentrator 150. This example implementation includes a PCI Express interface 153 to connect to a switched fabric device. It includes various ports for different sensor devices: port 151 and 152 for sensors on MIPI CSI2, HD-SDI, RS-170, and PCIe, port 154 for sensor and other I/O on USB, port 155 for sensor and other I/O on TSN Ethernet, and port 156 for power supply, and power and status indicator 158. The example implementation shows a hardware case 157 with physical dimensions 8" H x 4.8" W x 3" D. The backside 160 of the sensor concentrator 150 is configured to optimize heat dissipation by convection to surrounding air. Other mechanisms for heat dissipation may be substituted, including conduction cooling to the surrounding structure, or liquid cooling.

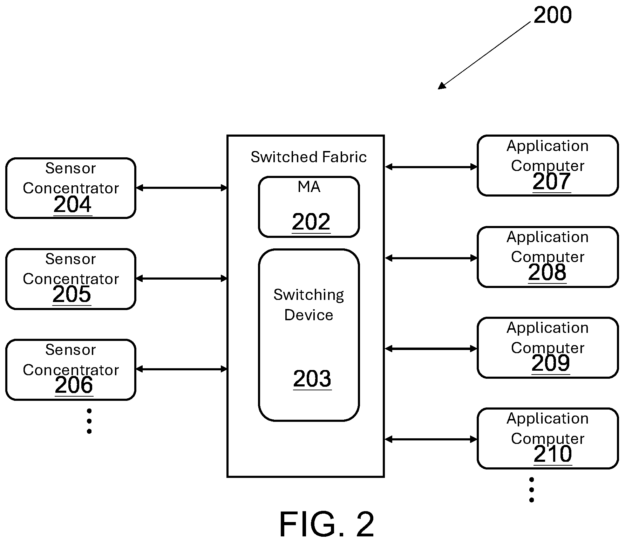

Figure 2 presents a comprehensive system block diagram 200 illustrating the internal architecture and data flow relationships within the vehicle situational awareness system. The switched fabric 201 incorporates two critical subsystems: the management agent (MA) 202 and the switching device array 203. The switched fabric 201 maintains high-speed connections to multiple sensor concentrators 204, 205, 206 and application computers 207, 208, 209, 210, creating a unified high-performance computing and communication infrastructure optimized for real-time sensor data processing and distribution. The number of sensor concentrators may be more or less than the number shown in Figure 2, and the number of application computers may be more or less than the number shown in Figure 2.

The management agent (MA) 202 functions as an intelligent control system responsible for comprehensive switched fabric oversight, including data flow optimization, system health monitoring, fault detection and response, and operational reconfiguration capabilities. The MA 202 incorporates a dedicated processing complex featuring dedicated processors, configurable logic resources, and sophisticated control software operating independently from any input/output devices or external systems. This autonomous control capability enables the MA 202 to maintain system operations through complete operational cycles including initial power-on sequences, system startup and initialization, normal operational modes, dynamic reconfiguration for changing mission requirements, controlled shutdown procedures, fault detection and isolation, emergency shutdown protocols, and low-power hibernation modes for extended standby operations. The MA 202 can accept optional software modules and configuration packages to support specialized management requirements for specific sensor types, switching device configurations, and mission-specific operational parameters. Additional capabilities include comprehensive telemetry collection and transmission to remote monitoring systems, remote activation and control interfaces for unmanned operations, and integration with external command and control systems.

The switching device 203 primarily includes advanced PCI Express switching hardware that may be implemented using high-performance switch silicon capable of supporting multiple simultaneous high-bandwidth connections. The system may incorporate additional switching technologies, including dedicated Ethernet switches for Time Sensitive Networking (TSN) support, enabling seamless integration with existing vehicle systems and legacy equipment that utilize standard networking protocols over Ethernet, such as TCP/IP, UDP, and ICMP.

Each sensor concentrator 204, 205, 206 within the system supports single or multiple sensor configurations, enabling flexible deployment strategies based on mission requirements and platform constraints. Sensor types can be homogeneous for specialized applications or heterogeneous for comprehensive environmental monitoring. Supported sensor technologies include, for example, high-resolution video cameras for visual spectrum monitoring, thermal imaging cameras for heat signature detection and night vision capabilities, Light Detection and Ranging (LIDAR) sensors for precise distance measurement and three-dimensional environmental mapping, and focal plane array sensors for specialized electromagnetic spectrum analysis. Each sensor may incorporate a dedicated capture subsystem responsible for signal conditioning, analog-to-digital conversion, initial data formatting, and interface protocol management, enabling seamless integration with the concentrator's processing systems. The captured sensor data may undergo combination, correlation, and fusion processing within the concentrator to create unified, time-synchronized data streams optimized for downstream processing and analysis.

Sensor data flows from the concentrators 204, 205, 206 through the switched fabric 201 to the application computer array 207, 208, 209, 210 using PCIe multicast distribution to ensure simultaneous data availability across multiple processing nodes. Application computers can operate in manned configurations featuring integrated display systems for crew interaction, or unmanned configurations for autonomous processing applications. In manned operations, application computers may connect to high-resolution displays, advanced human interface devices, and communication systems. Output capabilities include multiple interface standards such as USB for peripheral connectivity, TSN Ethernet for network integration, PCI Express for high-speed device interfaces, HDMI output for high-definition display systems, and DisplayPort output for advanced graphics applications. Each application computer can be configured with specialized processing capabilities, memory systems, and software applications tailored to specific operational roles within the overall mission profile.

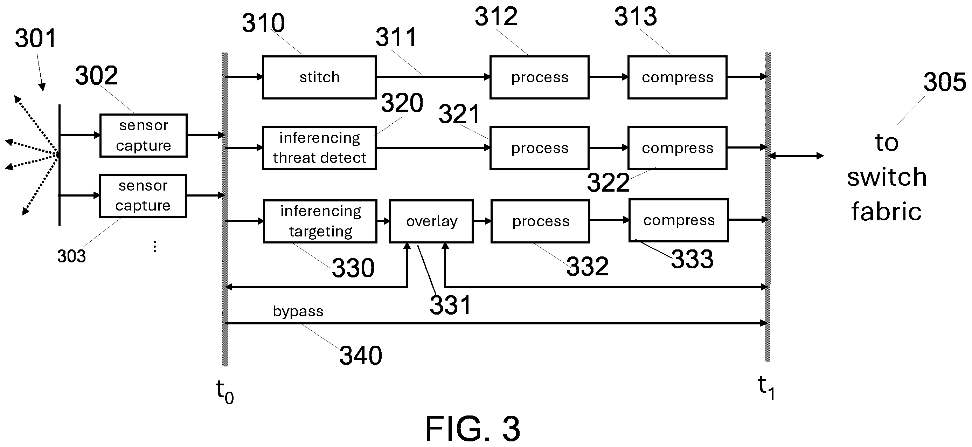

Figure 3 provides detailed insight into the sensor concentrator's internal processing architecture, illustrating data flow from initial sensor interface through various processing stages to final output distribution. The temporal processing sequence shown between time markers t0 and t1 represents the complete processing cycle for a single data frame, demonstrating the system's real-time processing capabilities. Data processing utilizes both traditional central processing units (CPUs) for general computation and specialized graphics processing units (GPUs) for accelerated parallel processing operations, particularly beneficial for image processing, artificial intelligence algorithms, and mathematical computations.

The sensor interface 301 provides comprehensive connectivity to external sensors through multiple industry-standard protocols and physical interfaces. Sensor data flows through dedicated capture units 302, 303 that may perform initial signal conditioning, format conversion, and quality assessment before forwarding data to the concentrator's processing subsystems. While Figure 3 illustrates two capture units, practical implementations can incorporate varying quantities based on sensor array complexity and processing requirements. The captured data then undergoes parallel processing through multiple specialized processing paths, each optimized for specific data transformation and analysis functions. The processing options shown in Figure 3 are exemplary processing options; the present disclosure is not limited to four options, nor are all four options necessarily required. Processing options may vary, depending on the needs of the captured and processed data.

The first processing option implements intelligent data stitching capabilities, combining sensor data from multiple sources into unified panoramic representations. For example, data streams from two video sensors, each providing a 90-degree field of view, may undergo geometric correction, temporal synchronization, and seamless blending through the stitching processing stage 310 to produce a unified 160-degree panoramic view 311. This panoramic data then receives additional processing 312 which may include image enhancement, stabilization, and/or format optimization. The processed data can undergo optional compression 313 using advanced algorithms such as H.265 encoding to reduce bandwidth requirements while maintaining image quality, before transmission to the switched fabric 305. Alternatively, the system can bypass compression (not shown) and transmit uncompressed data directly through the **PCI** Express interface for applications requiring maximum image fidelity and minimal processing latency. This processing path can support human monitoring applications and autonomous navigation systems requiring wide-field environmental awareness.

The second processing pathway focuses on artificial intelligence-based data inferencing and automated threat detection 320. Data inferencing utilizes advanced machine learning algorithms and statistical analysis techniques to extract meaningful information and identify patterns within complex sensor data streams. This computationally intensive processing may leverage GPU acceleration and may incorporate pre-trained machine learning models for object recognition, threat classification, and behavioral analysis. The inferencing results combine with original sensor data in processing stage 321 to create enhanced data streams containing both raw sensor information and analytical insights. Subsequent compression 322 using algorithms such as H.265 reduces data transmission requirements while preserving critical information content. The system can bypass compression (not shown) when maximum data fidelity is required, transmitting uncompressed results directly through the **PCI** Express interface to the switch fabric 305. This processing pathway may serve autonomous threat detection systems, object recognition applications, and intelligent surveillance functions, providing actionable information for both human operators and automated response systems.

The third processing option enables advanced targeting and field-of-interest analysis 330, accepting input data both from local sensors through the sensor interface 301 (334) and from external systems via the switched fabric 305 (335) to be overlayed 331 within the processing step. External systems can identify specific areas of interest, transmit targeting coordinates, or provide threat intelligence that guides the concentrator's processing focus. This bidirectional data flow, shown to and from both the sensor interface 301 and switched fabric 305, enables real-time overlay of external information with local sensor data, creating enhanced situational awareness displays and targeted analysis capabilities. The concentrator can dynamically adjust sensor parameters, including field-of-view modifications to focus on specific areas of interest (FOI) identified through external data feeds. These automatic identification and target detection (AITD) and automatic identification and target recognition (AITR) capabilities enable the system to provide enhanced accuracy and faster response times for critical targets or areas of concern. Processed data from stage 332 undergoes optional compression 333 before transmission through the switched fabric 305, or bypasses compression (not shown) for applications requiring minimal latency. This processing mode can support precision targeting applications, collaborative threat assessment, and coordinated multi-platform operations where multiple systems share targeting information and analytical results.

The fourth processing option provides a direct bypass capability 340, transmitting sensor data from the interface 301 directly to the switched fabric 305 without intermediate processing. This mode enables applications requiring absolute minimum latency, such as direct video feeds for human operators, real-time navigation displays, or emergency response systems where processing delays could compromise safety or mission effectiveness. The bypass mode ensures video delays remain below human perceptual thresholds, maintaining end-to-end latency under 16 milliseconds, for example, for critical applications such as vehicle operation, pilot displays, or emergency response coordination.

The sensor concentrator's ability to perform sophisticated data processing at the point of acquisition enables immediate generation and transmission of alert signals through the switched fabric, ensuring all application computers receive critical information without additional processing delays. This distributed processing architecture creates true low-latency, time-coherent sensor data delivery throughout the multiprocessing system, enabling coordinated responses and maintaining temporal synchronization across all system components.

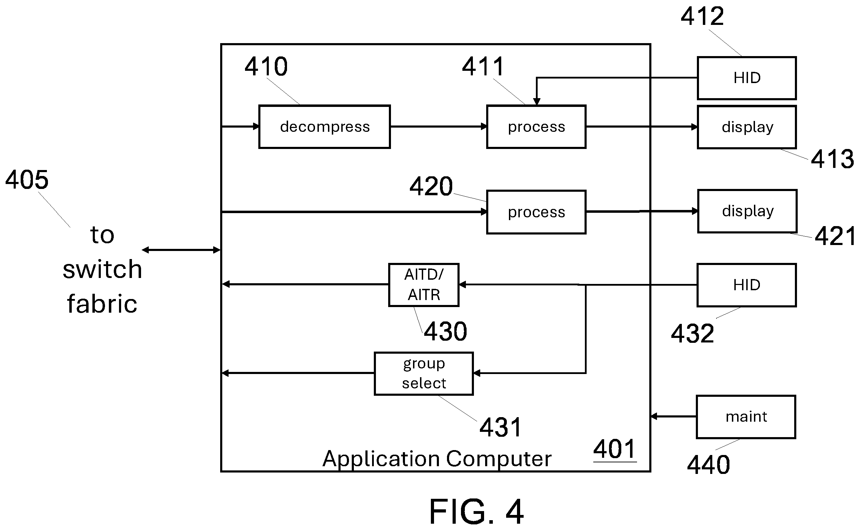

Figure 4 illustrates the application computer's internal architecture and external interface capabilities, showing bidirectional data flow patterns that support both data consumption and system control functions. Communication pathways to and from the switched fabric 405 appear on the diagram's left side, while external interfaces and peripheral connections are shown on the right. The application computer 401 may house substantial processing capabilities utilizing either or both CPUs and GPUs configured for parallel processing operations, enabling simultaneous execution of multiple computational tasks.

The primary processing pathway supports data visualization and human interface operations, receiving sensor data from the switched fabric 405 for display on integrated monitor systems 413, 421. Compressed data streams may undergo decompression processing 410 using algorithms complementary to the sensor concentrator's compression techniques, followed by GPU-based processing 411 for any of display formatting, enhancement, and presentation optimization. The GPU can receive formatting commands and display parameters from Human Input Devices (HID) 412, which can include dedicated control panels with programmable buttons connected via USB interfaces, precision joysticks for navigation control, computer mice for cursor operations, or specialized pointing devices for targeting and selection operations. For applications not requiring decompression, data can flow directly from the switched fabric 405 to GPU processing 420 and subsequently to display systems 421. Display technologies can include ruggedized monitors suitable for vehicle environments, virtual reality headsets for immersive situational awareness, augmented reality displays for overlay information presentation, or combinations of display types to support varied operational requirements.

Application computers can maintain bidirectional communication with sensor concentrators through the switched fabric, enabling dynamic system reconfiguration and adaptive processing control. Human Input Device 432 can provide operator input for sensor concentrator data inferencing and targeting functions 330, supporting automatic identification and target detection/recognition (AITD/AITR) operations 430. Human operators can designate specific fields of interest for detailed analysis, adjust sensor parameters based on observed conditions, and direct automated processing algorithms to focus on areas of concern. This information can transmit to sensor concentrators through the switched fabric 405 using either Ethernet or PCI Express protocols, depending on latency requirements and data characteristics.

The group select function 431 may enable application computers to dynamically configure their data subscriptions, communicating with the switched fabric 405 to specify which sensor sources should be multicast to the specific application computer 401. This selective subscription capability optimizes bandwidth utilization and processing resources by ensuring each application computer receives only relevant data streams. The management agent 202 within the switched fabric 201 processes these subscription requests and can configure multicast distribution accordingly, enabling efficient data routing throughout the system.

The maintenance port 440 can provide essential system support functions, including software updates, configuration management, and auxiliary device connectivity, for example. This port may support connection of additional Ethernet-compatible devices, enabling system expansion and integration with external equipment. Direct sensor connections to this port may enable limited sensor interface functionality, allowing the application computer to function as a basic sensor concentrator for specialized applications such as crew monitoring cameras, providing "over the shoulder" viewing capabilities for training or documentation purposes. Application computers can operate in both local configurations, where they are physically mounted within the vehicle, or remote "headless" configurations, where the computer operates off-vehicle with communication maintained through Ethernet network connections.

The system's multicast capabilities enable multiple application computers to receive identical sensor data simultaneously, supporting collaborative processing applications and operational redundancy. Application computers can be organized into functional groups with shared data subscription profiles, enabling efficient resource utilization and coordinated processing operations. For example, navigation-focused computers might subscribe to forward-looking sensor data and positioning information, while threat detection computers might prioritize thermal imaging and radar data streams. Individual computers can participate in multiple groups simultaneously, receiving diverse data streams to support complex analytical operations.

The **PCI** Express switched fabric architecture enables the system to achieve exceptionally compact form factors suitable for space-constrained vehicle installations. Complete system implementations can be packaged in enclosures smaller than 4 inches by 3 inches by 8 inches, making the technology suitable for unmanned aerial vehicles, ground robots, marine vessels, and other platforms where size and weight constraints are critical design factors. This miniaturization is achieved through the high integration density of **PCI** Express switching technology and the elimination of traditional networking infrastructure that would otherwise require additional space and power.

Alternative embodiments may utilize Compute Express Link (CXL) technology as a supplement to or replacement for PCI Express connectivity. CXL provides cache-coherent interconnect capabilities that enable multiple computers to simultaneously access shared memory locations without data conflicts or synchronization issues. When multiple processing nodes require access to identical sensor data or shared analytical results, CXL ensures coherent data access and eliminates potential race conditions that could compromise system performance or data integrity. This alternative interconnect technology may offer advantages for applications that require extensive data sharing or collaborative processing operations.

The described embodiments represent preferred implementations of the vehicle situational awareness architecture, but numerous modifications and variations are possible without departing from the fundamental principles and scope of the present disclosure. The modular architecture supports diverse sensor types, processing capabilities, and application requirements while maintaining the core advantages of low-latency, time-coherent data distribution, and simultaneous multicast availability. Additional embodiments may incorporate different sensor technologies, alternative processing algorithms, varied interface standards, or specialized configurations optimized for specific vehicle types or mission profiles.

The disclosed system represents a significant advancement in vehicle situational awareness technology, providing unprecedented capabilities for real-time sensor data processing and distribution. The combination of intelligent sensor concentrators, high-performance switched fabric architecture, and flexible application computers creates a comprehensive solution suitable for diverse applications ranging from military operations to commercial autonomous systems to scientific exploration platforms. The system's scalability, modularity, and performance characteristics enable deployment across a wide range of vehicle types and operational environments while maintaining consistent low-latency, high-reliability performance essential for mission-critical applications.

## Claims

1. A vehicle situational awareness system comprising:
a switched fabric including a management agent and at least one switching device;
at least one sensor concentrator connected to the switched fabric, wherein each sensor concentrator includes at least one sensor and at least one central processing unit (CPU); and
at least one application computer connected to the switched fabric;
wherein the switched fabric interconnects the at least one sensor concentrator and the at least one application computer via a PCI Express interface to provide low-latency, high-bandwidth communication supporting both point-to-point and point-to-multipoint data transmission,
wherein the management agent controls switched fabric operations including power-on startup, regular operation, and fault response, and
wherein the switched fabric is configured to route sensor data from the at least one sensor concentrator to the at least one application computer with simultaneous data availability across multiple application computers using multicast capabilities.

2. The system of claim 1, wherein the at least one sensor comprises at least one sensor selected from the group consisting of: a video camera, a thermal camera, a LIDAR sensor, and a focal plane array sensor.

3. The system of any of the preceding claims, wherein the switched fabric provides time synchronization between the at least one sensor concentrator and the at least one application computer.

4. The system of claim 3, wherein the time synchronization comprises at least one of TSN Ethernet and PCI Express.

5. The system of any of the preceding claims, wherein the system operates as a distributed multiprocessing architecture supporting concurrent data processing across multiple computing nodes.

6. The system of any of the preceding claims, wherein the system is configured to support multiple simultaneous applications selected from the group consisting of: navigation, object recognition, target recognition, threat detection, and off-vehicle communication.

7. The system of any of the preceding claims, wherein the at least one sensor concentrator is configured to perform multiple data processing operations, including:
capturing and processing sensor data from multiple connected sensors;
stitching synchronized sensor data from the multiple sensors into unified panoramic representations;
performing data inferencing and threat detection;
executing targeted data processing; and
delivering bypass data transmission.

8. The system of any of the preceding claims, wherein the at least one sensor concentrator further comprises at least one graphics processing unit (GPU).

9. The system of any of the preceding claims, wherein the system is configured to provide 360-degree awareness by integrating multiple sensor types and real-time processing capabilities.

10. The system of any of the preceding claims, wherein the switched fabric is configured to deliver sensor data from a point of acquisition to a point of use in less than 50 milliseconds.

11. The system of any of the preceding claims, wherein the management agent includes a dedicated processor, logic resources, and software that operate independently of any I/O device and manage the switched fabric during power-on, startup, regular operation, operational reconfiguration, regular shutdown, fault response, fault shutdown, and low-power hibernation.

12. The system of any of the preceding claims, wherein the at least one sensor concentrator includes multiple sensor capture units, each linked to a respective sensor and configured to gather sensing data for combination and processing within the sensor concentrator.

13. The system of any of the preceding claims, wherein the at least one application computer includes a human input device (HID) configured to provide input for data inferencing and targeting in the at least one sensor concentrator.

14. The system of any of the preceding claims, wherein the at least one application computer comprises a maintenance port configured to support software updates and serve as an auxiliary port for connection of additional Ethernet-compatible devices.

15. The system of any of the preceding claims, wherein the multiple application computers are configurable into groups, wherein each group can subscribe to different datasets from sensor concentrators.

16. The system of any of the preceding claims, wherein the switched fabric further comprises Compute Express Link (CXL) interconnect standard for cache-coherent communication between multiple application computers accessing a memory location simultaneously.

17. The system of claim 7, wherein the stitching of data from multiple video sensors comprises combining data from two video sensors, each having a field of view of 90 degrees, to create a single panorama with a field of view of at least 160-degrees.

18. The system of claim 7 or 17, wherein the performing data inferencing and threat detection comprises inputting sensor data to a trained machine learning model and processing an inferred result using a GPU.

19. The system of claim 7, 17 or 18, wherein the targeted data processing comprises automatic identification and target detection (AITD) and automatic identification and target recognition (AITR) capabilities.

20. The system of claim 19, wherein the targeted data processing includes changing a field of view (FOV) to a field of interest (FOI) based on data transmitted from the switched fabric.

21. The system of claim 11, wherein the management agent is configured to accept optional software packages to support management requirements of specific connected switching devices and sensors, telemetry of local system status to remote systems, and remote activation and control of the system.

22. A vehicle comprising the system of any of the preceding claims, wherein the vehicle is selected from the group consisting of: manned vehicles, unmanned vehicles, ground vehicles, aerial vehicles, underwater vehicles, and space vehicles.

23. The vehicle of claim 22, further comprising a plurality of sensor concentrators, each sensor concentrator configured to connect to sensors situated around different parts of a vehicle's external shape.

24. A method of providing vehicle situational awareness, the method comprising:
acquiring sensor data from at least one sensor connected to at least one sensor concentrator;
processing the sensor data using at least one CPU within at least one sensor concentrator;
routing the processed sensor data through a switched fabric comprising a management agent and a switching device; and
delivering the sensor data to at least one application computer via PCI Express multicast capabilities.
